## Europäisches Patentamt
## European Patent Office
## Office européen des brevets

(19)

(11) Veröffentlichungsnummer: **0 012 405**
**B2**

(12) # NEUE EUROPÄISCHE PATENTSCHRIFT

(45) Veröffentlichungstag der neuen Patentschrift:
**18.10.89**

(51) Int. Cl.⁴: **B 29 C 55/12**, B 29 C 71/02

(21) Anmeldenummer: **79105024.8**

(22) Anmeldetag: **10.12.79**

(54) Verfahren zur Herstellung von thermoplastischen Flachfolien mit verbesserter Dimensionsstabilität.

(30) Priorität: **18.12.78 DE 2854554**

(43) Veröffentlichungstag der Anmeldung:
**25.06.80 Patentblatt 80/13**

(45) Bekanntmachung des Hinweises auf die Patenterteilung:
**30.03.83 Patentblatt 83/13**

(45) Bekanntmachung des Hinweises auf die Entscheidung
über den Einspruch:
**18.10.89 Patentblatt 89/42**

(84) Benannte Vertragsstaaten:
**AT BE CH DE FR GB IT LU NL SE**

(56) Entgegenhaltungen:
**DE-A- 1 629 562**
**DE-A- 2 017 602**
**FR-A- 1 459 737**
**GB-A- 922 091**

(73) Patentinhaber: **HOECHST AKTIENGESELLSCHAFT,**
**Postfach 80 03 20, D-6230 Frankfurt am Main 80 (DE)**

(72) Erfinder: **Monzer, Helmut, Rheingaustrasse 176,**
**D-6200 Wiesbaden (DE)**

EP 0 012 405 B2

# Beschreibung

Die vorliegende Erfindung betrifft ein Verfahren zur Herstellung biaxial gestreckter Flachfolien aus thermoplastischen Kunststoffen, die eine gegenüber bekannten Folien verbesserte Dimensionsstabilität aufweisen und die gleichzeitig hohe Festigkeit besitzen.

Die Herstellung biaxial gestreckter Flachfolien aus thermoplastischen Materialien gehört seit langem zum Stand der Technik. Man geht daher derart vor, dass man eine Schmelze des entsprechenden Thermoplasten aus einer Breitschlitzdüse extrudiert, die Schmelze vorzugsweise auf einer Kühlwalze verfestigt, anschliessend die Vorfolie auf Strecktemperatur erwärmt und zunächst in einer Richtung senkrecht zur ersten Streckrichtung die gestreckte Folie abkühlt und aufwickelt. Hierbei sind Verfahren bekannt, bei denen man längs-quer oder umgekehrt streckt.

Weiterhin gehört es zum Stand der Technik, gleichzeitig in Längs- und Querrichtung zu strekken, wobei man sich sogenannter Simultanstreckrahmen bedient. Solcherart hergestellte Folien besitzen einen von den Herstellungsbedingungen und den Thermoplasten abhängigen Schrumpf sowohl in Längs- als auch Querrichtung und werden als Schrumpffolien, z. B. zur Herstellung von Schrumpfverpackungen, eingesetzt.

Neben den genannten Folien werden für zahlreiche Anwendungszwecke, z. B. als Zeichen- und Trennfolien, als Basisfolien für photographische Zwecke oder Ton- und Computerbänder, für gedruckte Schaltungen u. ä., Folien benötigt, die einen möglichst geringen Schrumpf, d. h. eine verbesserte Dimensionsstabilität bei Wärmebelastung aufweisen. Zur Herstellung solcher Folien geht man in der Praxis derart vor, dass man die biaxial gestreckten Folien im Streckrahmen einer Thermofixierung, d. h. einer Wärmebehandlung bei erhöhten Temperaturen, unterwirft, wodurch der Schrumpf vermindert wird. Man spricht auch dabei von einer sogenannten Wärmehärtung der Folie. Die Thermofixierung baut zwar den Schrumpf bis zu einem gewissen Masse ab, es bleibt jedoch, abhängig vom jeweiligen Thermoplasten und den Bedingungen bei der Thermofixierung, immer ein gewisser Restschrumpf, der sich auch durch Verlängerung der Fixierungszeit und/oder Erhöhung der Temperatur nicht beseitigen lässt, so dass immer nur ein Grenzwert erreicht werden kann.

Aufgabe der Erfindung war es deshalb, ein Verfahren bei der Herstellung von biaxial gestreckten und thermofixierten thermoplastischen Flachfolien zu entwickeln, bei dem der Restschrumpf nach herkömmlichen Verfahren hergestellter Folien weiterhin vermindert werden kann, ohne dass sich die guten physikalischen Eigenschaften, z. B. hinsichtlich Reissfestigkeit, Reissdehnung u. ä., solcher Folien im wesentlichen ändern.

Gelöst wird die vorstehend genannte Aufgabe durch ein Verfahren zur Herstellung biaxial gestreckter Flachfolien aus thermoplastischem Kunststoff mit verbesserter Dimensionsstabilität, wobei man den thermoplastischen Kunststoff aus einer Breitschlitzdüse extrudiert, zur Vorfolie abkühlt, die Vorfolie auf die jeweilige Strecktemperatur erwärmt und stufenweise oder simultan in den orthogonalen Richtungen streckt, anschliessend die gestreckte Vorfolie thermofixiert, abkühlt und gegebenenfalls aufwickelt, dessen kennzeichnendes Merkmal darin besteht, dass man die Folie ausschliesslich nach der Thermofixierung während der Abkühlung in Querrichtung konvergierend führt und in Längsrichtung die Foliengeschwindigkeit gegenüber derjenigen in der Thermofixierzone vermindert, wobei man die Folie nach Verlassen der Thermofixierzone in einen konvergierenden Rahmen einführt, dessen Kluppenabstand in Bahnlaufrichtung gesehen geringer wird, und man dabei abkühlt.

Es wurde überraschenderweise gefunden, dass man mit dem erfindungsgemässen Verfahren die nach dem Verfahren des Standes der Technik erzielbaren Grenzwerte für den Schrumpf bei biaxial gestreckten und thermofixierten thermoplastischen Folien weiter herabdrücken kann.

Solcherart hergestellte Folien mit verbesserter Dimensionsstabilität sind für die eingangserwähnten Anwendungsgebiete besonders gut geeignet. Je nach Anwendungszweck der hergestellten Folien können die Schrumpfwerte in Querrichtung erfindungsgemäss vermindert werden. Es erfolgt eine gleichzeitige Verbesserung der Dimensionsstabilität in Quer- und Längsrichtung. Der Schrumpfabbau in Querrichtung wird dadurch erzielt, dass man die Folienbahn konvergierend in einem Kluppenrahmen oder einer ähnlichen Einrichtung führt, wobei man gleichzeitig abkühlt.

Erfindungsgemäss wird die Folie zur Verminderung der Foliengeschwindigkeit in Längsrichtung in einen konvergierenden Rahmen eingeführt, dessen Kluppenabstand in Bahnlaufrichtung gesehen geringer wird, wobei man vorzugsweise mit Kühlgasduschen kühlt. Eine solche Folienführung stellt praktisch eine umgekehrte Führung, wie sie bei der Simultanstreckung verwendet wird, dar.

Eine weitere Möglichkeit der erfindungsgemässen Abkühlung besteht darin, dass man die Ränder der Folie nach dem Verlassen der Thermofixierzone thermisch isoliert führt, wobei eine zusätzliche Aufheizung vorgenommen werden kann und man die Folie im Raum zwischen den Rändern, z. B. mittels Kühlgasduschen, abkühlt. Bevorzugt sind die Randzonen dabei abgeschottet, damit die Kühlung im Mittenbereich nicht beeinträchtigt wird. Die Ränder werden unmittelbar nach der Warmhaltezone abgesäumt. Die Folie wird konvergierend geführt. Da dieses Verfahren technisch relativ einfach durchzuführen ist, wird es bevorzugt eingesetzt.

Es ist auch möglich, das Verfahren derart durchzuführen, dass man die Ränder der Folie nach der Thermofixierung absäumt.

Bei einer Führung und Abkühlung mittels z.B. eines Schwebetrockners mit beidseitig angeordneten Düsen oder beim Arbeiten mit porösen Walzen, in die Gas eingeblasen wird, wurde eine gute Planlage beobachtet.

Wenn das erfindungsgemässe Verfahren auch auf alle streckbaren Folien, die nach der Thermofixierung noch einen Restschrumpf aufweisen, anwendbar ist, so wird es jedoch bevorzugt bei Polyester- und Polypropylenfolien eingesetzt, da diese in den eingangs erwähnten Gebieten besonders häufig verwendet werden.

Die Erfindung wird an Hand der folgenden Beispiele zusätzlich erläutert, ohne dass jedoch eine Einschränkung hierauf bestehen soll.

Beispiel 1

Es wurden verschiedene Polyäthylenterephthalatfolien mit unterschiedlichen Streckgraden nach unterschiedlichen Verfahren hergestellt und mit 230°C heisser Luft im Längs-Querverfahren bzw. mit 200°C heisser Luft im Quer-Längsverfahren thermofixiert. Nach Verlassen der Thermofixierstrecke wurden 5 cm breite Ränder der Folie durch IR-Strahlung auf einer bestimmten Temperatur gehalten, während der zwischen den Randzonen liegende Bereich mittels einer Luftdusche von 25°C abgekühlt wurde. Die Randzonen waren mittels hochstehender Bleche abgeschottet. Die erhaltenen Ergebnisse sind in der folgenden Tabelle zusammengestellt.

## Tabelle

| $\lambda_l$ | $\lambda_q$ | Streckver-fahren | Folien-dicke ($\mu$m) | Abkühlung erfindungs-gemäss: ja | Schrumpf längs (%) | Temperatur an den Folien-rändern (C°) |
|---|---|---|---|---|---|---|
| 3,5 | 3,8 | längs-quer | 50 | nein | 1,0 | – |
| 3,5 | 3,8 | längs-quer | 50 | ja | 0,5 | 120 |
| 2,0 | 2,0 | längs-quer | 50 | nein | 1,0 | – |
| 2,0 | 2,0 | längs-quer | 50 | ja | 0,5 | 120 |
| 3,0 | 3,0 | längs-quer | 50 | nein | 1,0 | – |
| 3,0 | 3,0 | längs-quer | 50 | ja | 0,5 | 120 |
| 3,5 | 3,8 | längs-quer | 50 | ja | 0,2 | 200 |
| 3,9 | 3,5 | quer-längs | 12 | nein | 6,1 | – |
| 3,9 | 3,5 | quer-längs | 12 | ja | 4,9 | 200 |

$\lambda_l$ = Längsstreckverhältnis
$\lambda_q$ = Querstreckverhältnis

Der Schrumpf wurde bei 150°C und einer Dauer von 15 Min. an rechteckigen Proben mit einer Kantenlänge von 10 cm ermittelt. Der Schrumpf in Querrichtung betrug in allen Fällen 0%, da die Rahmenführung mit einer Konvergenz von 2,5% eingestellt war.

Beispiel 2 (Vergleichsbeispiel)

Es wurde eine 50 $\mu$m starke Folie aus Polyäthylenterephthalat mit $\lambda_l$ = 3,5 und $\lambda_q$ = 3,8 hergestellt und bei 230°C thermofixiert. Nach der Thermofixierung wurden die Ränder der Folie besäumt und die Folie freilaufend abgekühlt. Der Schrumpf in Längs- und Querrichtung betrug zwar jeweils 0%, jedoch war die Planlage eindeutig verschlechtert.

Beispiel 3

Es wurde eine 30 $\mu$m starke, biaxial gestreckte Polypropylenfolie ($\lambda_l$ = 6; $\lambda_q$ = 8) bei 160°C thermofixiert. Es wurde nach dem Verfahren des Beispiels 1 gearbeitet, wobei die Folienränder auf 110°C gehalten wurden. Der Schrumpf in Längsrichtung (130°C, 15 Min.) wurde hierbei mit 1,5% ermittelt, während er in Querrichtung 0% betrug. Die Konvergenz des Rahmens betrug in diesem Fall 4%.

Beispiel 4 (Vergleichsbeispiel)

Es wurde eine Folie gemäss Beispiel 3 hergestellt und nach dem Verfahren nach Beispiel 2 gearbeitet. Der Schrumpf betrug zwar auch hier in Quer- und Längsrichtung 0%, doch war auch hier die Planlage deutlich verschlechtert.

Wenn auch eine Reduzierung des Schrumpfes von beispielsweise 1,0% auf 0,5% optisch gesehen nicht besonders gravierend erscheint, so ist doch eine solche Verbesserung der Dimensionsstabilität von ausschlaggebender Bedeutung bei der Verwendung der Folien in den eingangs genannten Gebieten.

## Patentansprüche

1. Verfahren zur Herstellung biaxial gestreckter Flachfolien aus thermoplastischem Kunststoff mit verbesserter Dimensionsstabilität, wobei man den thermoplastischen Kunststoff aus einer Breitschlitzdüse extrudiert, zur Vorfolie abkühlt, die Vorfolie auf die jeweilige Strecktemperatur erwärmt und stufenweise oder simultan in den orthogonalen Richtungen streckt, anschliessend die gestreckte Vorfolie thermofixiert, abkühlt und gegebenenfalls aufwickelt, dadurch gekennzeichnet, dass man die Folie ausschliesslich nach der Thermofixierung während der Abkühlung in Querrichtung konvergierend führt und in Längsrichtung die Foliengeschwindigkeit gegenüber derjenigen in der Thermofixierzone vermindert, wobei man die Folie nach Verlassen der Thermofixierzone in einen konvergierenden Rahmen einführt, dessen Kluppenabstand in Bahnlaufrichtung gesehen geringer wird, und man dabei abkühlt.

2. Verfahren nach Anspruch 1, dadurch gekennzeichnet, dass man die Folie konvergierend führt und dass man die Ränder der Folie nach dem Verlassen der Thermofixierzone thermisch isoliert und/oder zusätzlich beheizt und den zwischen den Rändern liegenden Bereich abkühlt und die Ränder nach dem Verlassen der Warmhaltezone unmittelbar absaumt.

3. Verfahren nach Anspruch 1, dadurch gekennzeichnet, dass man die von den Kluppenketten gefassten Ränder nach der Thermofixierung absaumt und die Folie durch beiderseitige Gasbeaufschlagung schwebend führt und abkühlt.

4. Verfahren nach einer der Ansprüche 1 bis 3, dadurch gekennzeichnet, dass man Polyester- oder Polypropylenfolien verwendet.

## Claims

1. Process for the production of biaxially stretched flat sheets of a thermoplastic polymer, which have an improved dimensional stability, by extruding the thermoplastic polymer from a slot die, cooling it to form a pre-film, heating the pre-film to the respective stretching temperature and stretching it, stepwise or simultaneously, in the orthogonal directions, then heat-setting the stretched pre-film, colling it and winding it up, if required, wherein the film is, exclusively during cooling after heat-setting, convergently guided in the transverse direction and in the longitudinal direction the speed of the film is reduced in comparison to the film speed in the heat-setting zone, the film, after leaving the heat-setting zone, being introduced into a converging tenter, the clips of which are arranged at distances which diminish in the direction of feed, and being simultaneously cooled.

2. A process as claimed in claim 1, wherein the film is convergently guided and the edges of the film which has left the heat-setting zone are thermally insulated and/or additionally heated and the area between the edges is cooled and the edges are trimmed immediately after leaving the warming zone.

3. A process as claimed in claim 1, wherein the edges held by the tenter chains are trimmed after heat-setting and the film is guided in suspension by directing jets of gas on both surfaces and is thereby cooled.

4. A process as claimed in any of claims 1 to 3, wherein polyester films or polypropylene films are used.

## Revendications

1. Procédé de fabrication de feuilles planes biaxialement étirées en matière synthétique thermoplastique ayant une stabilité dimensionnelle améliorée dans lequel on extrude la matière synthétique thermoplastique à travers une filière à bec large, on refroidit la préfeuille, on réchauffe cette dernière à la température d'étirage choisie et on l'étire par étapes ou simultanément dans les directions orthogonales, ensuite on soumet la préfeuille étirée à une thermofixation, on la refroidit, et on la met éventuellement sur bobine, caractérisé en ce que l'on guide la feuille de manière convergente en direction transversale exclusivement après la thermofixation pendant le refroidissement, et on diminue en direction longitudinale la vitesse de la feuille par rapport à celle dans la zone de thermofixation, la feuille étant, après sa sortie de la zone de thermofixation, introduite dans un cadre convergent dans lequel la distance entre les pinces de guidage diminue dans le sens du défilement, et refroidie.

2. Procédé selon la revendication 1, caractérisé en ce que l'on conduit la feuille de façon convergente, et en ce qu'après sa sortie de la zone de thermofixation, on isole thermiquement et/ou on chauffe par mesure complémentaire, les bords de la feuille, et on refroidit la zone située entre les bords, et on coupe les bords immédiatement quand ils ont quitté la zone pour le maintien de la température.

3. Procédé selon la revendication 1, caractérisé en ce qu'après la thermofixation on coupe les bords pris dans les rangées de pinces de guidage et on guide la feuille flottant librement par soufflage bilatéral de gaz et on refroidit.

4. Procédé selon l'une des revendications 1 à 3, caractérisé en ce que l'on emploie des feuilles de polyester ou de polypropylène.